(19) Europäisches Patentamt
European Patent Office
Office européen des brevets

(11) Publication number: 0 483 954 A1

# (12) EUROPEAN PATENT APPLICATION

(21) Application number: **91307486.0**

(51) Int. Cl.[5]: **C08G 69/40**

(22) Date of filing: **13.08.91**

(30) Priority: **01.11.90 US 608059**
**01.11.90 US 608128**

(43) Date of publication of application:
**06.05.92 Bulletin 92/19**

(84) Designated Contracting States:
**DE FR GB IT**

(71) Applicant: **TEXACO CHEMICAL COMPANY**
**3040 Post Oak Boulevard**
**Houston, Texas 77056(US)**

(72) Inventor: **Speranza, George Phillip**
**2800 Silverleaf**
**Austin, Texas 78757(US)**
Inventor: **Su, Wei-Yang**
**11814, Knights Bridge**
**Austin, Texas 78759(US)**
Inventor: **Zimmerman, Robert Leroy**
**4202 Cordova**
**Austin, Texas 78759(US)**
Inventor: **Champion, Donald Hugh**
**805 Malden Cove**
**Pflugerville, Texas 78660(US)**

(74) Representative: **Green, Mark Charles et al**
**Urquhart-Dykes & Lord, 91 Wimpole Street**
**London W1M 8AH(GB)**

## (54) Modified polyamides.

(57) A polyamide polymerization product is produced by the reaction of a dibasic acid selected from alkane dicarboxylic acids containing 6 to 12 carbon atoms and unsubstituted or $C_1$-$C_4$ alkyl substituted benzene dicarboxylic acids and a poly(oxytetramethylene) diamine

EP 0 483 954 A1

This invention relates to modified polyether-based polyamides having improved thermal stability. More particularly, this invention relates to modified polyamides having improved physical properties, including stability and flexibility that are useful in the formation of fibers, molded parts, hot melt adhesives. Still more particularly, this invention relates to polyamides modified by the inclusion therein of poly(oxytetramethylene) diamines, sometimes colloquially referred to as poly(tetrahydrofuran) diamines, optionally together with poly(oxytetramethylene) oligomers containing one or more internal secondary amine groups and terminal primary amine groups.

Poly(oxytetramethylene) diprimary amine oligomers containing internal secondary amine groups are disclosed in Schoenieben et al. European Patent No. 0,354,501 dated June 8, 1989.

Nakagawa et al. U. S. Patent No. 3,558,419 is directed to composite filaments and fibers wherein one of the components is a polyalkylene ether-polyamide-block copolymer containing linear polyamide segments and polyoxyalkylene ether segments. Amine derivatives of polyoxyethylene glycols, when incorporated into polyamides, tend to adversely affect the water solubility characteristics of the resultant polyamides.

In Yeakey et al. U. S. Patent No. 4,128,525, thermoplastic adhesive components are disclosed which are prepared from a polyoxypropylene polyamine, piperazine and a dicarboxylic acid.

Linear polymeric amines prepared by first propoxylating a poly(oxytetramethylene) glycol and then reductively aminating the adduct are disclosed in Watts, Jr. et al. U. S. Patent No. 4,181,682.

Rasmussen U. S. Patent No. 4,218,351 is directed to impact resistant thermoplastic polyamides composed of a short chain polyamide-forming moiety, a polyamide-forming dimer acid moiety and a polyamide-forming oligomer moiety.

Wettable adhesives comprising a mixture of polyvinyl alcohol and a water soluble polyamide are disclosed in Soerens U. S. Patent No. 4,684,439. The polyamide comprises a reaction product of a polyoxyalkylene polyamine, a saturated aliphatic dicarboxylic acid and a polyalkylene polyamine.

Mitchell et al. U. S. Patent No. 4,062,820 is directed to hot melt adhesives prepared by the co-condensation of stoichiometric amounts of (a) a mixture of a polymeric fatty acid and a saturated aliphatic dicarboxylic acid with (b) a mixture of a saturated aliphatic diamine with either a polyoxyethylene diamine or a polyoxypropylene diamine.

Resinous polyoxamide thermoplastic adhesive compositions are disclosed in Schulze U. S. Patent No. 4,119,615 that are prepared by reacting a polyoxypropylene diamine or a polyoxypropylene triamine with oxalic acid or a dialkyl ester of oxalic acid to prepare a liquid prepolymer that is then reacted with a diamine to provide the resinous polyoxamide.

Resinous thermoplastic adhesive compositions are disclosed in Klein U. S. Patent No. 4,133,803 that are prepared by reacting a polyoxypropylene diamine or a polyoxypropylene triamine, such as ethylene diamine, with an aromatic or aliphatic dicarboxylic acid or an ester or anhydride thereof, such as isophthalic acid, dimethyl terephthalate or phthalic anhydride.

Vogel U. S. Patent No. 4,151,173 discloses lubricating oil additives prepared by reacting a polyoxyalkylene polyamine, such as a polyoxypropylene diamine or a polyoxypropylene triamine with a carboxylic acid acylating agent such as a polyisobutenyl succinic anhydride.

Thermoplastic adhesive compositions are disclosed in Yeakey et al. U. S. Patent No. 4,162,931 and Yeakey et al. U. S. Patent No. 4,182,845 that are prepared by reacting a polyoxypropylene diamine or a polyoxypropylene triamine with piperazine and an aromatic or aliphatic dicarboxylic acid or an ester or anhydride thereof, such as isophthalic acid.

Rieder U. S. Patent No. 4,239,635, discloses carboxylic acid terminated diamides, and the alkali metal, ammonium and amine salts thereof prepared by reacting a polyoxyalkylene polyamine, such as a polyoxypropylene diamine with an excess of an organic polycarboxylic acid.

Hot melt adhesive copolyamide compositions are disclosed in Sharkey U. S. Patent No. 4,282,346 that are prepared by reacting a polyoxypropylene diamine or a polyoxypropylene triamine with piperazine and mixture of a long chain and a short-chain saturated aliphatic dicarboxylic acid such as adipic acid and azelaic acid.

The subject of polyamides, in general, is discussed in Vol. 18, pp. 328-436 of the standard reference entitled Encyclopedia of Chemical Technology, Kirk Othmer, 3rd Edition.

Newbould in an article entitled "Controlling Melt Viscosity of High Melting Point Polyamides" (Adhesives Age, Nov. 1986, pp. 24-29) discusses polyamide-type hot melt adhesives such as those prepared from hexamethylene diamine, adipic acid, azelaic acid or dimer acids.

Iwabuchi et al. in a paper entitled "Preparation of Regularly Sequenced Polyamides with Definite Numbers of Oxyethylene Units and Their Application as Phase Transfer Catalysts" (Makromol. Chem., Vol. 184, pp. 535-543 (1983)) disclose polyamides having oligo(oxyethylene) segments prepared from alpha-(2-aminoethyl)-omega-aminooligo(oxyethylenes) and dicarboxylic acid chlorides.

As exemplified by the prior art mentioned above, polyamides formed by the polymerization of amino acids or the co-condensation of aliphatic diamines with dibasic acids, and frequently referred to as "nylon's" or nylon-type materials, are useful for a variety of purposes, including film and fiber preparation, the formation of molded parts, the preparation of hot melt adhesives, etc. The results obtained through the use of such materials have generally been satisfactory, but utility is frequently limited because of the physical properties of the polyamides. There is a need for the provision of polyamides having improved properties, such as low-temperature stability and flexibility.

This invention relates to polyamides modified by the inclusion therein of poly(oxytetramethylene) diamines that have improved physical properties, including thermal stability and flexibility properties that are useful in the formation of fibers, molded parts, hot melt adhesives, etc.

It has been discovered in accordance with the present invention that improved flexibility can be obtained through the provision of polyamides containing from about 100 to about 5 wt.% of a poly-(oxytetramethylene) diamine based on total amine, the poly(oxytetramethylene) diamine having the formula:

(I)

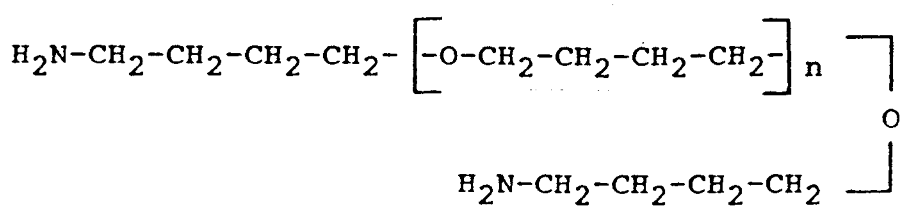

wherein n represents 0 or a positive number having a value of 1 to about 30.

For example, polyamide resins are widely used as engineering plastics. However, because they tend to have low impact strength at low temperatures they are not normally recommended for low temperature usage. Efforts have been made to improve low temperature impact strength through the use of elastomeric compounds, by grafting with ethylenically unsaturated monomers, etc., but the results have not been entirely satisfactory. In accordance with the present invention, the physical properties, including low temperature properties of polyamides, are improved through the provision of polyamides derived in whole or in part from poly(oxytetramethylene) diamines having formula (I) given above.

The physical properties, including low temperature properties of polyamides, are still further improved through the further incorporation into polyamides of poly(oxytetramethylene) diamine oligomers having the formula:

(II)

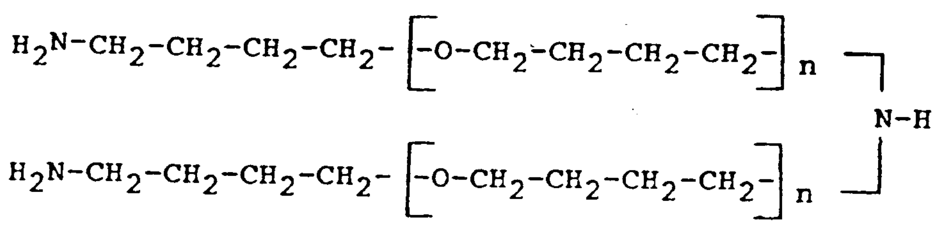

wherein n represents 0 or a positive number having a value of 1 to about 30.

The poly(oxytetramethylene) diamine may be represented by the formula:

(I)

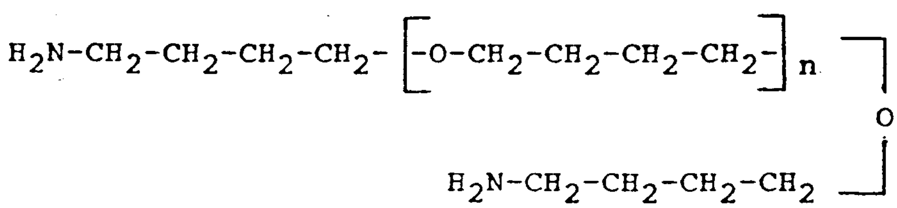

wherein n represents 0 or a positive number having a value of 1 to about 30.

The starting materials for the preparation of polyamides include dibasic acids selected from alkane dicarboxylic acids containing 6 to 12 carbon atoms and unsubstituted or alkyl substituted benzene dicarboxylic acids, saturated aliphatic amino acids containing 6 to 12 carbon atoms, saturated aliphatic lactams containing 6 to 12 carbon atoms, and saturated aliphatic diamines containing 2 to 12 carbon atoms.

The Poly(oxytetramethylene) Diamine

The poly(oxytetramethylene) diamine starting materials used in accordance with the present invention are poly(oxytetramethylene) diamines having the formula:

(I)

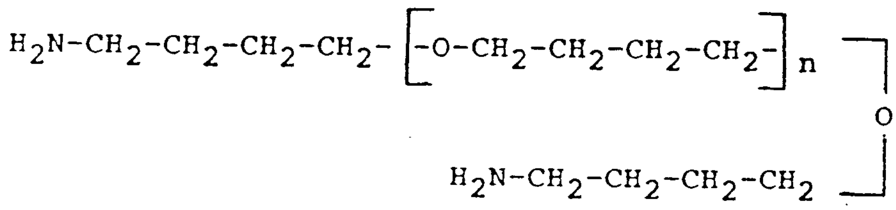

wherein n represents 0 or a positive number having a value of 1 to about 30.

EP-A-0434244 discloses a method which may be used for the preparation of the poly-(oxytetramethylene) diamine starting materials of the present invention.

Diamines having molecular weights of about 250, 650, 1,000 and 2,000 can be obtained from poly-(oxytetramethylene)glycols through the use of the above-referenced process by bringing a poly-(oxytetramethylene) glycol into contact with an appropriate nickel, copper, molybdenum, chromium catalyst in the presence of from about 1 to 300 moles of ammonia per mole of poly(oxytetramethylene)glycol and about 0.1 to 10 moles of hydrogen per mole of poly(oxytetramethylene)glycol under suitable reductive amination conditions including a temperature of about 150° to about 220°C., a pressure of about 100 to about 10,000 psig and a reaction time of about 0.5 to 5 hours.

The practice of this process will result in the substantial conversion of the terminal hydroxyl groups of the glycol to terminal primary amine groups. The poly(oxytetramethylene)diamine feedstocks to be used in the practice of the present invention are reductive amination products wherein the hydroxyl groups of the glycol have been converted to primary amine groups.

At comparatively high reductive amination conversion levels, such as conversion levels of more than about 90% of the poly(oxytetramethylene)glycol a minor amount of the conversion reaction product (e.g., about 5% or less) will contain secondary amine groups, such as secondary amines having the formula:

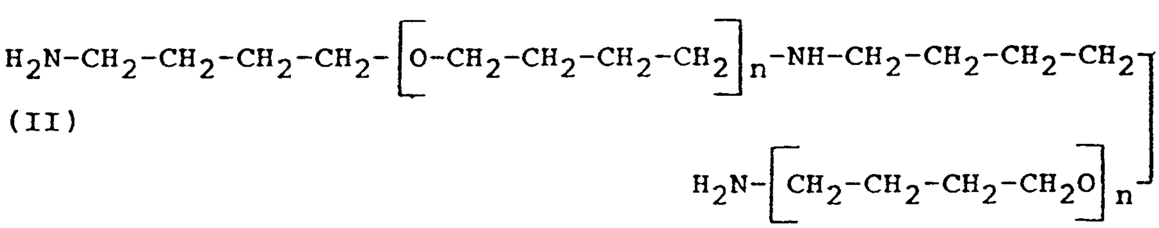

(II)

At lower reductive amination conversion levels of about 90% or less, the formation of secondary amine groups is insignificant.

According to one aspect of the present invention the poly(oxytetramethylene)diamine is essentially uncontaminated with secondary amines such as secondary amines having Formula II. This can be accomplished by conducting the reaction at a comparatively low conversion level of less than about 90% or by purification of the reaction product.

However, if it is desired to incorporate the oligomers, this can be accomplished by conducting the reaction at a comparatively high conversion level of about 90% or more.

The oligomers can also be prepared by the process disclosed in Schoenieben et al., EP-A-0354501.

Preferred poly(oxytetramethylene)diamines are those containing 2 oxytetramethylene groups (i.e., diamino 1,4-dibutylene ether). A preferred reductive amination product wherein n has a value of 1, is a diamine having a boiling point of about 75 ° C. at 0.09 mm Hg. and a purity of 98.6% (diamino 1,4-dibutylene ether). Another preferred product, wherein n has a value of 2, is a diamine having a boiling point of about 133 ° C. at 0.02 mm Hg. and a purity of 99.2% (diamino 1,4-tributylene ether).

## The Dicarboxylic Acid Starting Materials

The dicarboxylic acids to be used are selected from the group consisting of alkane dicarboxylic acids containing 6 to 12 carbon atoms and unsubstituted or alkyl substituted benzene dicarboxylic acids wherein the alkyl group contains 1 to 4 carbon atoms.

Suitable saturated aliphatic dicarboxylic acids that may be used in accordance with the present invention include compounds such as adipic acid, pimelic acid, suberic acid, azelaic acid, sebacic acid, dodecanedioic acid, etc. and mixtures thereof.

Suitable unsubstituted or alkyl substituted benzene dicarboxylic acids that may be used include compounds such as benzene dicarboxylic acids, isophthalic acid, terephthalic acid, etc., and mixtures thereof.

## The Saturated Aliphatic Amino Acid Starting Materials

The saturated aliphatic amino acid starting materials contain 6 to 12 carbon atoms.

Examples of amino acids are compounds such as 6-aminocaproic acid, 11-aminoundecanoic acid, etc., and mixtures thereof.

## The Saturated Lactam Starting Materials

The saturated aliphatic lactams that may be used as starting materials in accordance with the present invention are saturated lactams containing 6 to 12 carbon atoms.

Lactams such as epsilon caprolactam, enantholactam, capryllactam, undecanolactam, laurylactam and alkyl substituted caprolactams, etc., and mixtures thereof may be used. The preferred starting material is epsilon caprolactam.

## The Aliphatic Diamine Starting Materials

The saturated aliphatic lactams that may be used as starting materials in accordance with the present invention are saturated aliphatic diamines containing 4 to 12 carbon atoms, such as tetramethylenediamine, hexamethylenediamine, dodecamethylenediamine, piperazine, 2,5-dimethyl piperazine, diaminocyclohexane, etc.

## Preferred Embodiments

In accordance with one preferred embodiment of the present invention, a polyamide is prepared by reacting equimolar portions of a poly(oxytetramethylene) diamine with the dicarboxylic acid component to prepare a polyamide co-condensation product. In general, the polyamide co-condensation products are useful as elastomers and, normally, are characterized by good color, good temperature stability and good flexibility. The co-condensation products can also be used to prepare fibers and adhesives.

In accordance with another preferred embodiment of the present invention, a polyamide is prepared from a first component composed of equimolar portions of a poly(oxytetramethylene) diamine and a dicarboxylic acid and a second component composed of equimolar amounts of a saturated aliphatic diamine containing 4 to about 12 carbon atoms and a dicarboxylic acid, as defined above. In accordance with this embodiment, the first component may be used in the form of a salt of a poly(oxytetramethylene) diamine with a dicarboxylic acid which is co-reacted with the second component, which may be used in the form of an aliphatic diamine salt of a dicarboxylic acid. Alternately, the aliphatic diamine, the poly-(oxytetramethylene) diamine and the dicarboxylic acid can be used in monomeric form and co-reacted in a single reaction step. As a third alternative, the first components can be co-reacted to form a first co-polyamide, the second components can be reacted to form a second co-polyamide and the first co-polyamide can then be blended with the second co-polyamide to form a polyblend. In accordance with this preferred embodiment, the final polyamide co-condensation product will be composed, preferably, of about

5 to about 100 wt.% of the first components and, correspondingly, from about 95 to about 0 wt.% of the second components. More preferably, the final polyamide cocondensation product will contain about 5 to about 30 wt.% of the first component and from about 95 to about 70 wt.% of the second component. The final polyamide co-condensation products are characterized, in general, as having good flexibility properties and improved toughness. They may be used, for example, to prepare films, fibers, molded products and elastomers.

In accordance with a third preferred embodiment, a copolyamide co-condensation product is prepared from a first component composed of equimolar portions of a poly(oxytetramethylene) diamine and a dicarboxylic acid and a second component composed of a saturated aliphatic lactam containing 6 to 12 carbon atoms. Again, the first component, in the form of a salt of a poly(oxytetramethylene) diamine with a dicarboxylic acid which is coreacted with the second component, or the components may be used as monomers and co-condensed. The final polyamide co-condensation product will be composed, preferably, of about 5 to about 100 wt.% of the first components and, correspondingly, from about 95 to about 0 wt.% of the second component. More preferably, the final polyamide co-condensation product will contain about 5 to about 30 wt.% of the first component and from about 95 to about 70 wt.% of the second component. The final polyamide co-condensation products are characterized, in general, as having good thermostability properties, good flexibility properties and improved toughness. They may be used, for example, to prepare fibers and elastomers.

In accordance with a fourth preferred embodiment of the present invention, a co-polyamide co-condensation product is prepared from a first component composed of equimolar portions of a poly-(oxytetramethylene) diamine and a dicarboxylic acid and a second component composed of a saturated aliphatic amino acid containing 6 to about 12 carbon atoms. As previously indicated, the first component may be used in the form of a salt of a poly(oxytetramethylene) diamine with a dicarboxylic acid, may be co-reacted with the second component, or the components may be used as monomers and co-condensed. The final polyamide co-condensation product will be composed, preferably, of about 5 to about 100 wt.% of the first components and, correspondingly, from about 95 to about 0 wt.% of the second component. The final polyamide co-condensation products are characterized, in general, as having good thermostability properties, good flexibility properties and improved toughness. They may be used, for example, to prepare fibers and elastomers.

According to further embodiments, a mixture of the poly(oxytetramethylene) diamine of formula I with oligomers of formula II is prepared for incorporation into a polyamide, such mixture containing from about 0.1 to about 15 wt.% of the oligomers. When the mixture is to be incorporated into a polyamide to be used for the preparation fibers, it is preferred that the mixture contain from about 0.1 to about 10 wt.% of the oligomers. When molded articles or hot melt adhesives are to be prepared, the mixture will suitably contain from about 1 to about 10 wt.% of the oligomers.

In accordance with a further embodiment of the present invention, a polyamide is prepared by reacting an equimolar amount of a dicarboxylic acid component with a diamine component consisting of a mixture of the poly(oxytetramethylene) diamines of formula I with oligomers of formula II and the two components are then mixed and reacted in accordance with known polyamide-forming procedures to prepare a polyamide co-condensation product.

In general, such polyamide co-condensation products are characterized by good color, good low temperature stability and good flexibility. The co-condensation products can also be used to prepare fibers, films, molded products, adhesives, etc.

In accordance with another preferred embodiment of the present invention, a polyamide is prepared from a first component composed of equimolar portions of a poly(oxytetramethylene) diamine and oligomers thereof and a dicarboxylic acid and a second component composed of equimolar amounts of a saturated aliphatic diamine containing 2 to about 12 carbon atoms and a dicarboxylic acid, as defined above. In accordance with this embodiment, the first component may be used in the form of a salt of a poly(oxytetramethylene) diamine or oligomer with a dicarboxylic acid which is reacted with a second component, and the second component may also be used in the form of an aliphatic diamine salt of a dicarboxylic acid. Alternatively, the aliphatic diamine, the poly(oxytetramethylene) diamine and the dicarboxylic acid can be used in monomeric form and co-reacted in a single reaction step.

As a third alternative, the first components can be co-reacted to form a first co-polyamide, the second components can be reacted to form a second co-polyamide, and the first co-polyamide can then be blended with the second co-polyamide to form a polyblend.

In accordance with this embodiment, the final polyamide co-condensation product will be composed, preferably, of about 5 to about 100 wt.% of the first components and, correspondingly, from about 95 to about 0 wt.% of the second components. The final polyamide co-condensation products are characterized, in general, as having good thermostability properties, good flexibility properties and improved toughness. They may be used, for example, to prepare films, fibers, molded products and elastomers.

In accordance with a further embodiment, a co-polyamide co-condensation product is prepared from a first component composed of equimolar portions of a dicarboxylic acid and poly(oxytetramethylene) diamines and oligomers thereof and a second component composed of a saturated aliphatic lactam containing 6 to 12 carbon atoms. Again, the first component may be used in the form of a salt of a poly-(oxytetramethylene) diamine with a dicarboxylic acid which is coreacted with the second component, or the components may be used as monomers and co-condensed. The final polyamide co-condensation product will be composed, preferably, of about 5 to about 100 wt.% of the first components and, correspondingly, from about 95 to about 0 wt.% of the second component. The final polyamide co-condensation products are characterized, in general, as having good thermostability properties, good flexibility properties and improved toughness. They may be used, for example, to prepare fibers, and elastomers.

In accordance with a further embodiment of the present invention, a co-polyamide co-condensation product is prepared from a first component composed of equimolar portions of a dicarboxylic acid and poly-(oxytetramethylene) diamines and oligomers thereof and a second component composed of a saturated aliphatic amino acid containing 6 to about 12 carbon atoms. As previously indicated, the first component may be used in the form of a salt of a poly(oxytetramethylene) diamine with a dicarboxylic acid and may be co-reacted with the second component, or the components may be used as monomers and co-condensed. The final polyamide co-condensation product will be composed, preferably, of about 5 to about 100 wt.% of the first components and, correspondingly, from about 95 to about 0 wt.% of the second component. The final polyamide co-condensation products are characterized, in general, as having good thermostability properties, good flexibility properties and improved toughness. They may be used, for example, to prepare fibers, and elastomers.

The products formed by the inclusion of poly(oxytetramethylene) oligomers are thermoplastic materials that may be formed into desired final products such as hot-melt adhesives, moldings, films and fibers by known polyamide utilization procedures and may also be modified, in accordance with known technology, by the incorporation therein of other components such as conventional polyamides or other polymers and additives such as fillers, dyes, oxidation inhibitors, etc.

The polyamides described will remain thermoplastic at temperatures of about 250° C. or less. However, if the polyamides are heated to higher temperatures, cross-linking may occur, at least to a limited extent.

In accordance with a further preferred embodiment of the present invention, this unusual property is deliberately utilized by forming the thermoplastic polyamide into a desired form at a temperature of less than about 250° C. and by then heating the formed polyamide to a thermosetting temperature, such as a temperature of about 260° to about 300° C., preferably in an inert atmosphere, for about 0.1 to about 10 hours to thermoset the polyamide and thereby enhance the rigidity of the polyamide.

In the conversion of alcohols to amines by the action of ammonia over a metal catalyst primary, secondary and tertiary amines may form.

$$R\text{-}CH_2OH + NH_3 \xrightarrow{M} RCH_2NH_2 + (RCH_2)_2NH + (R\text{-}CH_2)_3N$$

The reaction using secondary alcohols is more selective and less secondary and tertiary amines are formed.

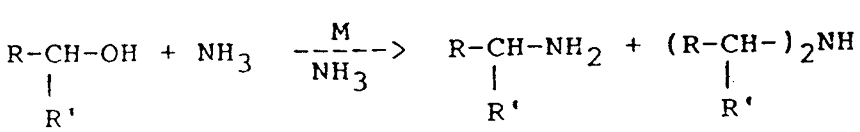


To convert diprimary glycols to diamines is very difficult. In the aminolysis of polytetrahydrofuran there is always some triamine formed when the reaction is carried out to high conversion.

$$HO(CH_2CH_2CH_2CH_2O)_x-CH_2CH_2CH_2CH_2OH \; + \; \xrightarrow[NH_3]{M}$$

$$NH_2(CH_2CH_2CH_2CH_2O)_x-CH_2CH_2CH_2CH_2NH_2$$

(A)

$$+ \; [NH_2-(CH_2CH_2CH_2CH_2O)_x-CH_2CH_2CH_2CH_2]_2N-H$$

(B)

It would be very desirable to use these amines because they have polyether groups which are more heat stable than conventional conventional polyether polyamines. For example, when adipic acid was heated with products containing A and B, where x is greater than 2, colorless crosslinked polymers were obtained that were heat stable at 283 ° C. under nitrogen. When this amine mixture was heated with sebacic acid or terephthalic acid, under the same conditions as that used in the adipic reaction, soft weak elastomeric fibers would be obtained. It was not until the reaction was carried out at 280 ° C. and 0.2 mm did we obtain the expected crosslinked polymer. Thus, the diamines mixed with the triamines have the potential of being important in the preparation of thermoset polymers. For adhesive applications, the polyamidation might be carried out to only a partial extent and then cured at a later stage.

A clear use for these compounds are as tackifying additives for adhesives when used in conjunction with other dibasic acids such as diamido acids. One product from the 1000 molecular weight polyol in which a high secondary amine content was made on purpose was studied (amine A + B).

$$NH_2-(CH_2CH_2CH_2CH_2O)_{13}-CH_2CH_2CH_2CH_2-NH-(CH_2CH_2CH_2CH_2O)_{13}-CH_2CH_2CH_2CH_2NH_2$$

+ Diamine

Total Amine 1.6 meq/g Primary amine 1.20 meq/g

| Acid, moles | Amine A+B, moles | Amine, moles | Remarks |
|---|---|---|---|
| adipic, 1 | 1 | - | Hard, tough, elastic, transparent, not liquid at 250°C. |
| dimer, 1 | 1 | - | Tough, elastic, transparent, not liquid at 250°C. |
| adipic, 1 | 0.1 | triethylene glycol diamine, 0.9 | Tough, hard, opaque molten at 190°C. |
| dimer, 1 | 0.5 | ethylenediamine*, 0.5 | Pliable solid, not liquid at 250°C. |
| adipic, 1 | 0.1 | hexamethylene-diamine, 0.9 | Hard, opaque, softens at about 150°C., waxy at 250°C. |

*The ethylenediamine and dimer acid were prereacted before reaction with amine A+B.

When compounds A and B are both mixed with dibasic acids such as adipic and sebacic at 260-300 ° C., crosslinked polymers are formed. The degree of crosslinking depends on the amount of B. If B is present in small amounts and these components are mixed with dibasic acids and caprolactam, adipic acid, hexamethylene diamine, amino acids, its polyamides are formed which can be melt spun into fibers or molded. In such cases the concentration of A is much greater than B and the combination of A and B represents a minor portion of the amino fraction of the polymer--up to about 30% if the proportion of A to B is very high.

The advantage of using the polyether amines described in this invention is that they are heat stable amines which impart flexibility to the polyamides. For example, similar compounds such as C and D are less color stable when heated to 280 ° C. with adipic acid (x is 0, 1, 2, 3, etc.).

$$NH_2-\underset{CH_3}{\underset{|}{CH}}-CH_2-(OCH_2CH_2CH_2CH_2)_x-OCH_2-\underset{CH_3}{\underset{|}{CH}}-NH_2 \quad (C)$$

$$NH_2CH_2CH_2CH_2(OCH_2CH_2CH_2CH_2)_x\text{-}OCH_2\text{-}CH_2CH_2NH_2 \quad (D)$$

As an example, compounds such as C and D start to turn light yellow when heated with a molar amount of adipic acid under nitrogen at 250 ° C. A mixture containing A and B when heated with a molar amount of adipic acid remained colorless when heated to 283 ° C. under nitrogen.

The introduction of a small amount of a triamine can be beneficial to the process of polyamine formation (see U.S. Patent No. 4,906,783 and references therein). The triamine used in our work also adds impact strength to the polyamides.

Reaction Conditions

The reactants are copolymerized under conventional reaction conditions in a reactor provided with suitable temperature control means and suitable agitation means at a temperature, for example, within the range of about 150° to about 300°C. for a reaction time within the range of about 2 to about 10 hours. A catalyst is not required. An oxidation inhibitor may be included in the reaction mixture to prevent oxidated deterioration of the reaction product. Suitable oxidation inhibitors include materials such as Ultranox 246, Irganox 1010, Irganox 1098, Irganox 1171, Irgafos 168 and mixtures therof.

EXAMPLES

The present invention will be further illustrated by the following specific examples which are given by way of illustration and which are not intended as limitations on the scope of this invention.

The analyses data of the diamines which are used in the polyamide preparation are given below:

| Sample 6374-61-1 (molecular weight 1000) | |
|---|---|
| Total acetylatable | 1.952 meq/g |
| Amine assay | 1.838 meq/g |
| Primary amine | 1.729 meq/g |

| Sample 6374-77-3 (molecular weight 650) | |
|---|---|
| Total acetylatable | 2.708 meq/g |
| Amine assay | 2.559 meq/g |
| Primary amine | 2.363 meq/g |

| Sample 6374-83-3 (molecular weight 2000) | |
|---|---|
| Total acetylatable | 0.933 meq/g |
| Amine assay | 0.844 meq/g |
| Primary amine | 0.779 meq/g |

Example 1 (6477-30B) - General Procedure for the Preparation of Polyether-amides

To a test tube was added 3.102g of sample 6374-61-1, 0.417g of adipic acid, 0.01g of Ultranox$^R$ 246, and 2.0g of water. The test tube was placed into a glass reactor equipped with a nitrogen purging tube. The reactor was heated to 170°C. for one hour and then 260°C. for four hours. A hard transparent colorless elastomer was obtained.

Examples 2-12

In the manner described in Example 1, other polyetheramides are prepared. The properties of these polyetheramides are shown in Table I.

TABLE I

POLYAMIDES FROM POLYTETRAHYDROFURAN DIAMINES AND DIBASIC ACID

| Example | Diamine | Acid | M.P. (°C) | Properties | Wt loss (%) N2/N2 | | |
|---|---|---|---|---|---|---|---|
| | | | | | 250°C | 300°C | 350°C |
| 1 (6477-30B) | 6374-61-1 | Adipic Acid | 65 | Colorless, hard transparent elastomer | 0.4 | 0.7 | 1.0 |
| 2 (6477-79) | " | Glutaric Acid | 47 | Light-yellow elastomer weak fiber, transparency | 0.6 | 0.8 | 1.2 |
| 3 (6477-72) | " | Sebacic Acid | 59 | Light yellow fiber, elastomer transparency | 0.6 | 1.0 | 2.0 |
| 4 (6477-82) | " | Azelaic Acid | 47 | Light-yellow, transparency elastomer, fiber | 0.6 | 1.0 | 1.5 |
| 5 (6477-76) | " | Dodecanedioic Acid | 80 | Colorless, hard elastomer | 0.2 | 0.5 | 1.0 |
| 6 (6477-75) | " | Terephthalic Acid | 90 | Off-white transparent elastomer | 1.1 | 1.2 | 2.0 |
| 7 (6477-75B)[a] | " | Terephthalic Acid | | Yellow transparent elastomer | 0.6 | 0.8 | 1.1 |
| 8 (6477-78) | " | Isophthalic Acid | | Off-white, soft weak elastomer | | | |
| 9 (6477-95) | 6374-77-3 | Adipic Acid | 68 | Off-white transparency, elastomer | 0.2 | 0.3 | 1.0 |
| 10 (6477-96) | " | Sebacic Acid | 60 | Yellow, elastomer, nice fiber | 0.8 | 1.3 | 3.0 |
| 11 (6478-36) | 6374-61-1 | Pimelic Acid | | Off-white, nice flexible elastomer | 0.6 | 0.7 | 1.0 |
| 12 (6478-37) | 6374-83-3 | Adipic Acid | | Light yellow elastomer tacky (hot) transparency | 0.8 | 1.1 | 2.0 |

Example 13 (6641-68)

To a reactor immersed in a silicone oil bath was added 1.16 parts of hexamethylenediamine, 1.76 parts of adipic acid and 0.32 parts of diamino 1,4-dibutylene ether (6600-53-1). The contents were heated for three hours at 270 ° C. and then three hours at 280 ° C. and 0.2 mm (under nitrogen). An excellent fiber was pulled from the reaction mass.

Example 14 (6641-74-1)

To a small reactor immersed in an oil bath was added 2.5 parts of epsilon caprolactam, 0.3 parts of adipic acid, 0.32 parts of diamino 1,4-dibutylene ether (6600-53-1) and 0.04g of Inganox 1010 (an antioxidant from Ciba Geigy). The contents were heated for three hours at 260 ° C. at which time fibers could be pulled.

Example 15 (6641-74-2)

As in the examples above, 2.5 parts of epsilon caprolactam, 0.3 parts of adipic acid, 0.47 parts of diamino 1,4-tributylene ether (6600-53-7) and 0.04 parts of Inganox 1010 were heated for three hours at 260 ° C. Fibers were obtained after this heating period.

Example 16 (6641-52-3)

In this example 2.62 parts of nylon 6,6 salt, 0.69 parts of diamino 1,4-tributylene ether (6600-53-7) and 0.45 parts of adipic acid were heated at 260 ° C. for three hours and then heated at 280 ° C. for three hours under 0.2 mm pressure. Long, strong fibers were pulled from the molten mass.

Example 17 (6641-78-1)

Fibers were obtained from 1.60 parts diamino 1,4-dibutylene ether (6600-53-1) and 1.46 parts of adipic acid after heating at 270 ° C. for two hours and 270 ° C. for three hours under 0.2 mm.

Example 18 (6641-78-2)

Fibers were obtained after heating 2.32 parts of diamino 1,4-tributylene ether (6600-53-7) and 1.46 parts of adipic acid after two hours at 270 ° C. and finally three hours at 270 ° C. and 0.2 mm.

Example 19 (6478-48)

Examples 7 and 8 utilize a poly(oxytetramethylene) diamine (6374-61-1) which had the following analysis:

| | |
|---|---|
| Total acetylatables | 1.952 meq/g |
| Amine Assay | 1.838 meq/g |
| Primary amine | 1.729 meq/g |

It is estimated that product was about 94% amine with about 94% of the amine being primary diamines. Water (2.0 parts), 0.62 parts 6374-61-1, 0.083 parts of adipic acid and 3.616 parts of epsilon caprolactam was heated at 270-280 ° C. for five hours. Excellent fibers were pulled from the melted polymer.

Example 20 (6478-47)

Water (1.5 parts), 3.87 parts epsilon caprolactam, 0.58 parts 6374-61-1 and sebacic acid were heated at 270-290 ° C. for five hours. Nice fibers were obtained.

Example 21 (6641-80-1)

Terephthalic acid (1.66 parts), 2.36 parts of diamino 1,4-tributylene ether (6600-53-7), and 0.5 parts of water were heated at 280° C. for three hours and then at 280° C. for 3 hours at 0.3 mm. (Purified nitrogen was passed through the contents in this and all experiments described). Fibers were obtained, although somewhat brittle indicating higher temperatures may be required.

Example 22 (6641-80-2)

Epsilon caprolactam (2.2 parts), 0.5 parts water, 0.83 parts terephthalic acid and 1.18 parts diamino 1,4-tributylene ether (6600-53-7) were heated at 280° C. for 3 hours and then at 280° C. and 0.3 mm vacuum. An excellent elastomer fiber was obtained.

Example 23 (6477-84) - 20% Nylon 6,6 Salt Blend

To a test tube was added 2.846g of sample 6374-61-1 (polytetrahydrofuran diamine of 1000 molecular weight), 0.382g of adipic acid, 0.807g of Nylon 6,6 salt, and 2.0g of water. The test tube was placed into a glass reactor equipped with a nitrogen purging tube. The reactor was heated to 170° C. for one hour and 260° C. for five hours. An off-white elastomer (m.p. 246° C.) was obtained. The resulting copolyamide showed good thermostability by thermal gravimetric analysis in which 1% weight loss was found at 325° C.

Example 24 (6477-55) - 39% Nylon 6,6 Salt Blend

The procedure of Example 23 was followed except that 1.520g of sample 6374-61-1, 0.205g of adipic acid, 1.473g of Nylon 6,6 salt, and 3.0g of water were used. An off-white elastomer (m.p. 246° C.) was obtained. Thermal gravimetric analysis showed that 1% weight loss was found at 325° C.

Example 25 (6477-85) - 80% Nylon 6,6 Salt Blend

The procedure of Example 23 was followed except that 0.623g of sample 6374-61-1, 0.084g of adipic acid, 2.828g of Nylon 6,6 salt, and 2.0g of water were used and the reactor was heated to 280° C. A yellow elastomer was obtained. The product was drawn into fibers.

Example 26 (6477-58) - 50% JEFFAMINE$^R$ EDR-148 Amine - Adipic Acid Salt Blend

The procedure of Example 23 was followed except that 1.484g of sample 6374-61-1, 0.20g of adipic acid, 1.524g of JEFFAMINE$^R$ EDR-148 amine - adipic acid salt, and 2.0g of water were used. A light-brown elastomer (m.p. 254° C.) was obtained. The product showed good water absorbent property.

Example 27 (6477-88)

The procedure of Example 23 was followed except that 2.754g of sample 6374-61-1, 0.511g of sebacic acid, 0.816g of Nylon 6,6 salt, and 2.0g of water were used and the reactor was heated to 280° C. A yellow elastomer was obtained. The copolyamide was drawn into nice fibers.

Example 28 (6477-87)

The procedure of Example 27 was followed except that 1.746g of sample 6374-61-1, 0.324g of sebacic acid, 2.070g of Nylon 6,6 salt, and 2.0g of water were used. A yellow, weak elastomer was obtained. Thermal gravimetric analysis showed that 1% weight loss was found at 325° C.

Example 29 (6477-89)

The procedure of Example 27 was followed except that 0.722g of sample 6374-61-1, 0.134g of sebacic acid, 3.424g of Nylon 6,6 salt, and 2.0g of water were used and the reactor was heated to 280° C. for 10 hours. A yellow elastomer was obtained. Thermal gravimetric analysis showed that 1% weight loss was found at 300° C.

Example 30 (6477-98B)

The procedure of Example 23 was followed except that 2.565g of sample 6374-77-3 (polytetrahydrofuran diamine of 650 molecular weight), 0.471g of adipic acid, and 0.760g of Nylon 6,6 salt were used. A transparent, off-white color, elastomer was obtained. Thermal gravimetric analysis showed that 2% weight loss was found at 350 ° C.

Example 31 (6477-99B)

The procedure of Example 23 was followed except that 2.424g of sample 6374-77-3, 0.616g of sebacic acid, and 0.760g of Nylon 6,6 salt were used. A yellow elastomer (m.p. 268 ° C.) was obtained. The copolyamide was drawn into fibers. Thermal gravimetric analysis showed that 2% weight loss was found at 300 ° C.

Example 32 (6477-100)

A procedure of Example 23 was followed except that 1.711g of sample 6375-77-3, 0.314g of adipic acid, 2.025g of JEFFAMINE[R] EDR-148 amine-adipic acid salt, and 1.0g of water were used. A light-yellow color, rubbery-like elastomer was obtained. Thermal gravimetric analysis showed that 3% weight loss was found at 325 ° C.

Example 33 (6478-46)

A procedure of Example 23 was followed except that 2.743g of sample 6374-61-1, 0.507g of sebacic acid, 0.665g of JEFFAMINE[R] EDR-148 amine-adipic acid salt, and 2.0g of water were used. A light-yellow transparent elastomer was obtained. Thermal gravimetric analysis showed that 2.5% weight loss was found at 350 ° C.

TABLE II

COPOLYAMIDES FROM POLYTETRAHYDROFURAN DIAMINE

| Example | Polytetra-hydrofuran Diamine | Diabasic Acid | Salt Blend (%) | Properties | Weight Loss (%) N2/N2 | | |
|---|---|---|---|---|---|---|---|
| | | | | | 250°C | 300°C | 350°C |
| 23 (6477-84) | 6374-61-1[a] | Adipic Acid | Nylon 6,6 Salt (20%) | Off-white elastomer | 0.3 | 0.7 | 1.2 |
| 24 (6477-55) | 6374-61-1 | Adipic Acid | Nylon 6,6 Salt (39%) | Off-white elastomer | 0.7 | 0.8 | 1.2 |
| 25 (6477-85) | 6374-61-1 | Adipic Acid | Nylon 6,6 Salt (80%) | Yellow elastomer fibers | 1.5 | 2.0 | 3.0 |
| 26 (6477-58) | 6374-61-1 | Adipic Acid | JEFFAMINE[R] EDR-148 amine-adipic acid salt (50%) | Light-brown elastomer swell in water | 2.6 | 2.7 | 3.5 |
| 27 (6477-88) | 6374-61-1 | Sebacic Acid | Nylon 6,6 Salt (20%) | yellow elastomer fibers | 1.0 | 1.1 | 2.0 |
| 28 (6477-87) | 6374-61-1 | Sebacic Acid | Nylon 6,6 Salt (50%) | yellow weak elastomer | 0.5 | 0.8 | 1.7 |
| 29 (6477-89) | 6374-61-1 | Sebacic Acid | Nylon 6,6 Salt (80%) | yellow elastomer | 0.5 | 1.0 | 2.1 |
| 30 (6477-98B) | 6374-77-3[b] | Adipic Acid | Nylon 6,6 Salt (20%) | Off-white elastomer transparency | 1.1 | 1.3 | 2.0 |
| 31 (6477-99B) | 6374-77-3 | Sebacic Acid | Nylon 6,6 Salt (20%) | Yellow elastomer fibers | 1.0 | 2.0 | 4.0 |
| 32 (6477-100) | 6374-77-3 | Adipic Acid | JEFFAMINE[R] EDR-148 amine-adipic acid salt (50%) | Light-yellow rubbery-like elastomer | 2.0 | 2.5 | 4.0 |
| 33 (6478-46) | 6374-61-1 | Sebacic Acid | JEFFAMINE[R] EDR-148 amine-adipic acid salt (17%) | Light-yellow elastomer transparency | 0.6 | 1.1 | 2.5 |

a) Sample 6374-61-1 : Polytetrahydrofuran diamine of 1000 molecular weight
b) Sample 6374-77-3 : Polytetrahydrofuran diamine of 650 molecular weight

Example 34 (6477-76)

To a test tube was added 0.625g of sample 6374-61-1 (polytetrahydrofuran diamine of molecular weight 1000), 0.084g of adipic acid, 3.010g of epsilon caprolactam, 0.010g of ULTRANOX[R] 246, and 2.0g of water. The test tube was placed into a glass reactor equipped with a nitrogen purging tube. The reactor was

heated to 170°C. for one hour and then 260°C. for four hours. A light-brown elastomer was obtained in which a significant amount of white powder was dispersed through the polymer. The product was drawn into fibers.

Example 35 (6478-16)

The procedure of Example 34 was followed except that 0.488g of sample 6374-61-1, 0.090g of sebacic acid, 3.310g of epsilon caprolactam, and 1.5g of water were used. An off-white elastomer was obtained in which a significant amount of white powder through the polymer was noted. The product was drawn into tough fibers.

Example 36 (6478-18)

The procedure of Example 34 was followed except that 0.454g of sample 6374-61-1 diamine, 0.096g of dodecanedioic acid, 3.161g of epsilon caprolactam, and 1.5g of water were used. An off-white elastomer was obtained, while a significant amount of white powder was dispersed through the polymer.

Example 37 (6478-15)

The procedure of Example 34 was followed except that 0.334g of sample 6374-61-1, 0.051g of terephthalic acid, 2.386g of epsilon caprolactam, and 1.3g of water were used. A light-brown brittle elastomer was obtained.

Example 38 (6478-11)

The procedure of Example 34 was followed except that 0.60g of sample 6374-77-3 (polytetrahydrofuran diamine of 650 molecular weight), 0.11g of adipic acid, 2.854g of epsilon caprolactam, and 1.0g of water were used. An off-white elastomer was obtained in which a significant amount of white powder being dispersed through the polymer was noted. The product was drawn into nice fibers.

Example 39 (6478-47)

The procedure of Example 34 was followed except that 0.579g of sample 6374-61-1, 0.107g of sebacic acid, 3.871g of epsilon caprolactam, and 2.0g of water were used and the reactor was heated to 290°C. for five hours. A white color elastomer was obtained. The product is more thermally stable than the product of Example 35.

Example 40 (6478-48)

The procedure of Example 34 was followed except that 0.620g of sample 6374-61-1, 0.83g of adipic acid, 3.616g of epsilon caprolactam, and 2.0g of water were used and the reactor was heated to 280°C. for five hours. A light-yellow elastomer was obtained. The product was drawn into nice fibers. The product was more thermally stable than the product of Example 34.

The following Examples demonstrate the products and effect obtained using a diamine component comprising oligomers of poly(oxytetramethylene).

Example 41

Examples 41 and 42 utilize a poly(oxytetramethylene) diamine (6374-61-1). It is estimated that product was about 94% amine with about 94% of the amine being primary diamines. Water (2.0 parts), 0.62 parts 6374-61-1, 0.083 parts of adipic acid and 3.616 parts of caprolactam was heated at 270-280°C. for five hours. Excellent fibers were pulled from the melted polymer.

Example 42

Water (1.5 parts), 3.87 parts caprolactam, 0.58 parts 6374-61-1 and sebacic acid were heated at 270-290°C. for five hours. Nice fibers were obtained.

Example 43

Terephthalic acid (1.66 parts), 2.36 parts 6600-53-7 (diaminotri-1,4-butylene glycol), and 0.5 parts of water were heated at 280 ° C. for three hours and then at 280 ° C. for 3 hours at 0.3 mm. (Purified nitrogen was passed through the contents in this and all experiments described.) Fibers were obtained, although somewhat brittle indicating higher temperatures may be required.

Example 44

Examples 44 and 45 utilize poly(oxytetramethylene) 6374-77-3. In a small reactor was heated 3.1 parts of 6374-77-3 and 0.56 parts of adipic acid and the contents heated at 280 ° C. for four hours. An off-white, transparent, elastomeric product was obtained. A steel ball did not penetrate the polymer at 280 ° C., which indicated that crosslinking had taken place. Thermogravimetric analysis showed a weight loss of only 0.3% at 300 ° C. and 1.0% loss at 350 ° C when heated under nitrogen.

Example 45

Sample 6374-77-3 (3.04 parts) was heated with 0.77 parts of sebacic acid for four hours at 260 ° C. At this point nice, long fibers could be pulled from the sample and the product melted at 60 ° C. The sample was then heated at 280 ° C. and 0.2 mm pressure for three hours. The product was a hard, rubbery rock which stuck to glass.

Example 46

Polyamine 6374-61-1 (3.57 parts) was heated with 0.76 parts of dodecanedioc acid at 260 ° C. for 3.5 hours. The product melted at 80 ° C. and was colorless, hard elastomer. It showed 1% weight loss at 350 ° C. when heated for 10 minutes at 350 ° C. under nitrogen. When a steel ball was placed on the sample in a tube and the contents heated to 282 ° C., the ball sank only part of the way indicating cross-linking was taking place at the higher temperature.

Example 47

When 0.48 parts of terephthalic acid were heated with 3.15 parts of 6374-61-1 for four hours at 260 ° C., and at 280 ° C. for three hours under vacuum, fairly strong elastic fibers could be pulled from the molten mass. This experiment demonstrates that aliphatic dibasic acids increase the rate of the crosslinking step over aromatic dibasic acids.

Examples 41-47 show how fibers may be formed and how high molecular weight tough thermoset elastomeric polyamine adhesives can be made. Additional flexibility can be added by the addition of dimer acid. Other modifications can be made by the addition of other amines. Essentially, all of the formations led to flexible adhesive-type products except those where some incompatibility resulted. In such formulations, the products were usually hard and opaque.

**Claims**

**1.** A polyamide polymerization product of a dibasic acid selected from alkane dicarboxylic acids containing 6 to 12 carbon atoms and unsubstituted or $C_1$-$C_4$ alkyl substituted benzene dicarboxylic acids and a poly(oxytetramethylene) diamine having the formula:

(I)

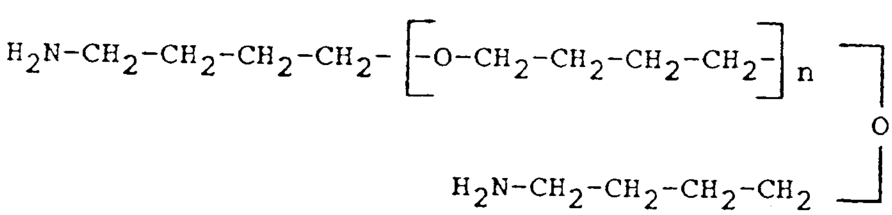

wherein n is 0 or a positive number from 1 to 30.

2. A product as claimed in Claim 1 further comprising a saturated aliphatic amino acid containing 6 to 12 carbon atoms, a saturated aliphatic lactam containing 6 to 12 carbon atoms, or a saturated aliphatic diamine containing 4 to 12 carbon atoms.

3. A polyamide polymerization product as claimed in Claim 1 or Claim 2 comprising from 5 to 100 wt.% of a salt of a poly(oxytetramethylene) diamine having the formula:

(I) 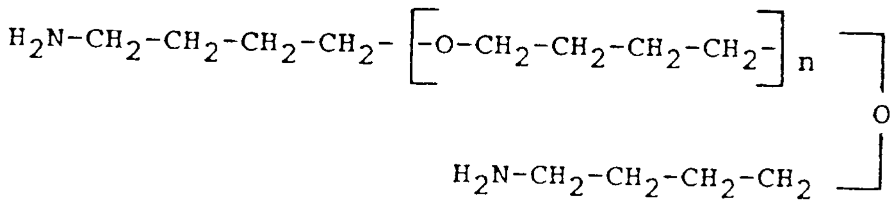

wherein n represents 0 or a positive number having a value of 1 to 30, and

a dibasic acid selected from dicarboxylic acids containing 6 to 12 carbon atoms and unsubstituted or $C_1$-$C_4$ alkyl substituted benzene dicarboxylic acids and, optionally, a second component composed of

from 95 to 0 wt.% of an unreacted or polyamide addition product of a saturated aliphatic amino acid containing 6 to 12 carbon atoms, or a saturated aliphatic lactam containing 6 to 12 carbon atoms, or

from 95 to 0 wt.% of an unreacted or polyamide co-condensation product of an equimolar mixture of a saturated aliphatic diamine containing 4 to 12 carbon atoms with a dibasic acid selected from the group consisting of alkane dicarboxylic acids containing 6 to 12 carbon atoms and unsubstituted or alkyl substituted benzene dicarboxylic acids.

4. A product as claimed in any one of Claims 1 to 3 wherein the dibasic acid and poly-(oxytetramethylene) diamine are present in equimolar amounts.

5. A product as claimed in any one of Claims 1 to 4 wherein the dibasic acid is adipic, dodecanoic, sebacic, azelaic, pimelic, terephthalic or isophthalic acid or a mixture thereof.

6. A product as claimed in any one of Claims 2 to 5 wherein the saturated aliphatic diamine is hexamethylene diamine or a diamine having the formula:

$$H_2N-\left[-CH_2-CH_2-O-\right]_{n'}-CH_2-CH_2-NH_2$$

wherein n' is a positive number having a value of 2 or 3.

7. A product as claimed in any one of Claims 2 to 5 wherein the lactam is epsilon-caprolactam.

8. A polyamide as claimed in any one of Claims 1 to 7 further comprising from 0.5 to 15 wt.% of oligomers of formula:

(II) 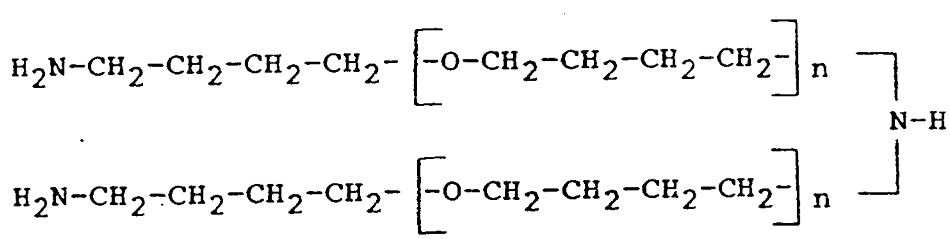

wherein n represents 0 or a positive number having a value of 1 to 30.

9. A polyamide polymerization product of from 5 to 95 mol% of a salt of a dibasic acid selected from alkane dicarboxylic acids containing 3 to 12 carbon atoms and unsubstituted or methyl substituted benzene dicarboxylic acids and a diamine component

with, correspondingly, from 95 to 5 mol% of a saturated aliphatic lactam containing 6 to 12 carbon atoms,

said diamine component consisting essentially of a mixture of poly(oxytetramethylene) diamines and oligomers of said poly(oxytetramethylene) diamines, said mixture containing from 85 to 99.5 wt.% of said poly(oxytetramethylene) diamines and, correspondingly, from 15 to 0.5 wt.% of said oligomers,

said poly(oxytetramethylene) diamines having the formula:

(I)

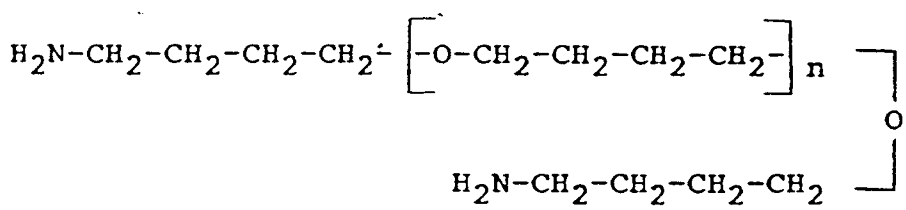

wherein n represents 0 or a positive number having a value of 1 to 30,

said oligomers having the formula:

(II)

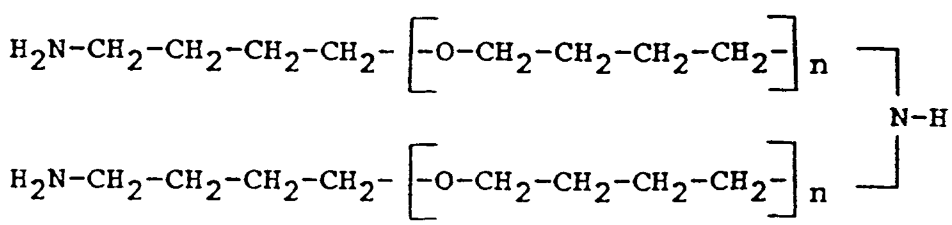

European Patent Office

# EUROPEAN SEARCH REPORT

Application Number

EP 91 30 7486

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 8, no. 251 (C-252), 16th November 1984; & JP-A-59 131 628 (UBE KOSAN) 28-07-1984<br>--- | 1-9 | C 08 G 69/40 |
| Y | PATENT ABSTRACTS OF JAPAN, vol. 11, no. 163 (C-424), 26th May 1987; & JP-A-61 293 223 (TOKYO INST. OF TECHNOLOGY) 24-12-1986<br>--- | 1-9 | |
| D,Y | US-A-3 558 419 (K. OKAZAKI et al.)<br>* Examples; claims *<br>----- | 1-9 | |
| | | | TECHNICAL FIELDS SEARCHED (Int. Cl.5) |
| | | | C 08 G |

The present search report has been drawn up for all claims

| Place of search | Date of completion of the search | Examiner |
|---|---|---|
| THE HAGUE | 18-02-1992 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document